# EUROPEAN PATENT SPECIFICATION

(11) **EP 4 644 692 B1**
(45) Date of publication and mention of the grant of the patent: **15.04.2026**
(21) Application number: 25202138.1
(22) Date of filing: 13.12.2023
(51) Int. Cl.: F03D 1/06, F03D 80/00, F03D 80/50, B29B 17/02, B29K 63/00, B29L 31/08, C08J 11/26

(54) **WIND TURBINE BLADE MANUFACTURE**
HERSTELLUNG EINER WINDTURBINENSCHAUFEL
FABRICATION DE PALE D'ÉOLIENNE

(30) Priority: 13.12.2022 DK PA202270602
(43) Date of publication of application: 05.11.2025
(62) Divisional of application: 23825393.4
(73) Proprietor: VESTAS WIND SYSTEMS A/S, 8200 Aarhus N (DK)
(72) Inventor: Rehmeier, Mie, 8471 Sabro (DK); Nielsen, Troels Bach, 8240 Risskov (DK)
(74) Representative: Vestas Patents Department

(56) References cited:
- WO-A1-2018/050189
- WO-A1-2021/191292
- DORIGATO ANDREA: "Recycling of thermosetting composites for wind blade application", ADVANCED INDUSTRIAL AND ENGINEERING POLYMER RESEARCH, vol. 4, no. 2, 1 April 2021 (2021-04-01), pages 116 - 132, XP093133281, ISSN: 2542-5048, DOI: 10.1016/j.aiepr.2021.02.002
- RANI MANJEET ET AL: "A review on recycling and reuse methods for carbon fiber/glass fiber composites waste from wind turbine blades", COMPOSITES PART B, ELSEVIER, AMSTERDAM, NL, vol. 215, 9 March 2021 (2021-03-09), XP086577524, ISSN: 1359-8368, [retrieved on 20210309], DOI: 10.1016/J.COMPOSITESB.2021.108768

## Description

### Technical Field

The present invention relates generally to wind turbine blades and methods for recycling wind turbine blades.

### Background

Composite wind turbine blades comprise a number of components which are variously configured to resist the loads and conditions experienced by the blade during extended use under extreme conditions while restricted by space, weight and shape to provide an aerodynamically efficient shape. Use of composite materials in the manufacture of such components is typically advantageous because the arrangement of materials used can be optimised to a high degree according to the specific requirements of each component. However, this can result in blades having a complex bill of materials including several types of fibre reinforcement plastic, foam core materials and resin systems, with limited overall recycling strategy since each component may require different treatments for comprehensive recycling at end of life.

Furthermore, the nature of composite wind turbine blade construction is such that components and materials cannot be easily mechanically or chemically separated once the binding resins and adhesives are cured. As a result, it is difficult to extract materials for recycling from a blade that has reached its end of life. The state of the art in composite wind blades recycling is described in the article by A. Dorigato: "Recycling of thermosetting composites for wind blade application", published in "Advanced Industrial and Engineering Polymer Research" (2021).

It is against this background that the invention has been devised.

### Summary of the Invention

A first aspect of the present invention provides a wind turbine as disclosed in claim 1. The wind turbine blade comprises a blade shell comprising a core material and a first fibre reinforced plastic, a shear web comprising a second fibre reinforced plastic, and an adhesive. The shear web is adhered to the blade shell with the adhesive, and the first fibre reinforced plastic, the second fibre reinforced plastic, and the adhesive each comprise an acid breakable epoxy polymer. Wherein properties of the acid breakable epoxy polymer of a first component are different from properties of the acid breakable epoxy polymer of a second component, where the first component and the second component are different components selected from the group consisting of the first fibre reinforced plastic, the second fibre reinforced plastic, and the adhesive. It was found this is highly advantageous as it allows for disintegrating several components of the wind turbine blade at the same time and/or under same conditions without the need to first separate the components from each other. Till now, recycling of wind turbine blades has focused on recycling of fibre reinforced plastic components and mainly to extract the fibres for reuse. In the present invention, the blade is designed so both fibre reinforced plastic components and polymeric components without reusable fibre reinforcement (adhesive and optionally other polymer components such as coatings and foams) may be recycled using one general strategy, which allows for much higher efficiency in the recycling process. Further, this allows for easier separation of the components not containing an acid breakable epoxy polymer from the components with an acid breakable epoxy polymer by first disintegrating the acid breakable polymer or polymers, and thereafter separate components not containing acid breakable epoxy polymer from the disintegrated components. Further, some components comprising acid breakable epoxy polymer also contains elements that are not an acid breakable polymer, such as for example fibres, sensors, metal parts, and these may also easily be removed after disintegrating the acid breakable epoxy polymer into particles of swelled epoxy polymer. By epoxy polymer is herein meant a crosslinked or entangled polymer system created completely or partially by reactions of epoxide groups. By acid breakable epoxy polymer is herein meant an epoxy polymer capable of swelling upon exposure to acid to mechanically break some of the chemical bonds. Thereby, particles of swelled epoxy polymer will be formed from the object constructed of the epoxy polymer. The process of swelling the acid breakable epoxy polymer into particles of swelled epoxy polymer is here in interchangeably referred to as swelling, acid breaking or disintegrating. Acid breakable epoxy polymers may for example be epoxy polymers based on amine cured epoxy resins such as for example Olin Airstone 760, Hexion RIMR 035C infusion epoxy, Aditya Birla Recyclamine system. In other words, epoxy polymers based on amine cured epoxy resins form a subgroup of acid breakable epoxy polymers. In the wind turbine blades according to the invention, it is preferred that the acid breakable epoxy polymer is an epoxy polymer based on an amine cured epoxy resin.

Optionally, the acid breakable epoxy polymer of each of the first fibre reinforced plastic, the second fibre reinforced plastic, and the adhesive is acid breakable in an acidic fluid comprising acetic acid and/or formic acid. Formic acid and acetic acid are both readily available bulk chemicals which may be sourced from recyclable sources and has limited chemical risk profile.

Optionally, the acid breakable epoxy polymer of each of the first fibre reinforced plastic, the second fibre reinforced plastic, and the adhesive is based on amine cured epoxy resins. Such resins are readily commercially available and was found to be relatively fast acid breakable particularly in formic acid containing acidic fluid.

In an embodiment, the wind turbine blade further comprises a spar and/or a spar cap as a load carrying component of the wind turbine blade. The structural spar or spar cap may be integral with the blade shell. The spar and/or spar cap comprises a third fibre reinforced plastic, which third fibre reinforced plastic comprises an acid breakable epoxy polymer. The spar and/or spar cap may be a pultruded fibre reinforced plastic. The acid breakable epoxy polymer of the third fibre reinforced plastic is preferably has similar chemical properties as the acid breakable epoxy polymer of each of the first fibre reinforced plastic, the second fibre reinforced plastic, and the adhesive. This allows for different parts of the blade being swelled in the same process and hence reduces the complexity of a recycling plant. It was found that if the fibre of the third reinforced plastic is different from the fibre of the first and/or the second fibre reinforced plastic, then it may be advantageous that the spar and/or spar cap is separated from the rest of the blade before swelling the third fibre reinforced plastic as this allows for preparation of fibre fractions that are of a single type of fibres, which allows for easier and higher value recycling of the individual fibre fractions. Alternatively, the acid breakable epoxy polymer comprised in the spar and/or spar cap may be a different acid breakable epoxy polymer than the polymer of the acid breakable epoxy polymer of at least the first fibre reinforced plastic and the second fibre reinforced plastic, where the acid breakable epoxy polymer of the spar and/or spar cap will disassemble under different conditions and/or at a different rate under same conditions to facilitate separation of the spar and/or spar cap, or to facilitate separation of the fibres of the spar and/or spar cap from the fibres of the first fibre reinforced plastic and the second fibre reinforced plastic.

In an embodiment, the wind turbine blade further comprises at least one wind turbine blade coating arranged on the blade shell, wherein the blade coating also comprises an acid breakable epoxy polymer. Preferably the acid breakable epoxy polymer of the wind turbine blade coating has similar chemical properties as the acid breakable epoxy polymer of each of the first fibre reinforced plastic, the second fibre reinforced plastic, and the adhesive. It was found that this may allow for a system where the coating may be swelled together with other components and hence not delay or prevent swelling of other parts of the blade. Furthermore, this increases the overall amount of recycle material of the blade.

The core may be a light dimensionally stable material such as for example balsa wood core or a polymer foam core. In an embodiment, the core is a thermoplastic foam core material and preferably a material that is not- an acid breakable epoxy polymer. The foam core may therefore be easily separated from the components comprising acid breakable epoxy polymer after these components have been partially or fully disintegrated. This would also be the case if the core for example is based on balsa wood. In another embodiment, the core material is a foam core and comprises an acid breakable epoxy polymer and preferably the acid breakable epoxy polymer of the foam core material has similar chemical properties as the acid breakable epoxy polymer of each of the first fibre reinforced plastic, the second fibre reinforced plastic, and the adhesive. In this embodiment, the foam core may be swelled together with the other components comprising the acid breakable epoxy polymer and hence mechanically separation of the foam core material prior to the swelling is not required.

The wind turbine blade may comprise a further adhesive in addition to the adhesive. The further adhesive may also comprise an acid breakable epoxy polymer. Preferably the acid breakable epoxy polymer of the further adhesive has similar chemical properties as the adhesive. In another embodiment, the further adhesive has different chemical properties than the adhesive. Preferably the further adhesive will disintegrate much faster or much slower that adhesive.

The wind turbine blade may comprise a putty also known as a filler for adjusting aerodynamic profile and fill gaps of the wind turbine blade. The putty may comprise an acid breakable epoxy polymer and preferably the acid breakable epoxy polymer of the putty has similar chemical properties as the acid breakable epoxy polymer of each of the first fibre reinforced plastic, the second fibre reinforced plastic, and the adhesive. In this embodiment, the putty may be swellable together with the other components comprising the acid breakable epoxy polymer and hence mechanically separation of the components prior to the swelling is not required.

In an embodiment, the properties of the first component are different from properties of the second component, where the first component and the second component are different components selected from the group consisting of the first fibre reinforced plastic, the second fibre reinforced plastic, and the adhesive. If one or more of the spar and/or spar cap, the coating, the core, the third fibre reinforced plastic and the further adhesive comprises an acid breakable epoxy polymer, then it is preferred that the group also contains the acid breakable epoxy polymer containing components of this list. It is preferred that the properties that are different are at least two properties selected from the group of tensile strength, compression strength, bending strength, hardness, Young's modulus, transparency, abrasion resistance, surface gloss and density. For example, for the first fibre reinforced plastic and the second fibre reinforced plastic, it is preferred that the acid breakable epoxy polymer is transparent to allow for visual quality assurance of wetting and/or presence of pores in the cured fibre reinforced plastic, contrary to the adhesive and the further adhesive which preferably are non-transparent and more preferably dyed in a bright colour (such as green, blue, red or yellow) to facilitate visual inspection of presence of adhesive in critical positions. For core material, it is preferred that the density is much lower than for other components and typically the density of the core material is less than 50% of other components for example due to incorporation of small light particles or air bubbles in the core material. For the coating, it is preferred that the abrasion resistance as measured in an accelerated rain erosion test is higher than for other components and/or that the surface gloss is higher than for other components.

According to the invention, the properties of the acid breakable epoxy polymer of a first component are different from properties of the acid breakable epoxy polymer of a second component, where the first component and the second component are different components selected from the group consisting of the first fibre reinforced plastic, the second fibre reinforced plastic, and the adhesive. If one or more of the spar and/or spar cap, the coating, the core, the third fibre reinforced plastic and the further adhesive comprises an acid breakable epoxy polymer, then it is preferred that the group also contains the acid breakable epoxy polymer containing components of this list. It is preferred that the properties that are different are at least two properties selected from the group of glass transition temperature, tensile strength, compression strength, bending strength, hardness, Young's modulus, transparency and density. In general, glass transition temperature is preferably above 70°C, but for coatings it is preferably higher, such as above 80°C or above 90°C. For the first fibre reinforced plastic and the second fibre reinforced plastic, it is preferred that the acid breakable epoxy polymer is transparent to allow for visual quality assurance of wetting and lack of pores in the cured fibre reinforced plastic, contrary to the adhesive and the further adhesive which preferably are non-transparent and more preferably dyed in a bright colour (such as green, blue, red or yellow) to facilitate visual inspection of presence of adhesive in critical positions. For core material, it is preferred that the compression strength and the shear strength of the acid breakable epoxy polymer is higher than for another component.

In another embodiment, the properties of the uncured acid breakable epoxy polymer resin of a first component are different from properties of the uncured acid breakable epoxy polymer of a second component, where the first component and the second component are different components selected from the group consisting of the first fibre reinforced plastic, the second fibre reinforced plastic, and the adhesive. If one or more of the spar and/or spar cap, the coating, the core, the third fibre reinforced plastic and the further adhesive comprises an acid breakable epoxy polymer, then it is preferred that the group also contains the acid breakable epoxy polymer containing components of this list. It is preferred that the properties that are different are at least two properties selected from the group of transparency, colour, viscosity, pot life and cure time. For the uncured acid breakable epoxy polymer resin of the first fibre reinforced plastic and the second fibre reinforced plastic, it is preferred to have a high pot life and low viscosity to allow for full infusion prior to curing of the resin. The adhesive and the further adhesive (if present) are preferably non-transparent and more preferably dyed in a bright colour (such as green, blue, red or yellow) to facilitate visual inspection of presence of adhesive in critical positions prior to curing of the resin. If present, the acid breakable epoxy polymer resin of the foam material preferably has a high ability to hold gas bubbles (e.g. a high viscosity and surface energy), a low cure time and low cure temperature. If present, the acid breakable epoxy polymer resin in the spar and/or spar cap may preferably be provided via pultrusion of glass or carbon fibers, where fast curing is preferable to allow for fast processing speed.

In another embodiment, the acid breakable epoxy polymer of each of the first fibre reinforced plastic, the second fibre reinforced plastic, and the adhesive, are acid breakable or swellable under the same process conditions. Process conditions may for example be one or more of temperature, time, pressure, fluid in which the process is conducted, concentration of species in the fluid, presence of active ingredients such as catalysts in the fluid. This allows for the acid breakable epoxy polymers of these components to be swelled at the same time whereafter other parts of these components, such as for example fibres, metal inserts, sensors and other polymer parts, may be separated easily after or during the swelling process.

In another embodiment, the acid breakable epoxy polymer of the first component and the acid breakable epoxy polymer of the second component are swellable under a first set of process conditions, where the swelling of the acid breakable epoxy of the first component under the first set of process conditions is faster than the swelling of the acid breakable epoxy of the second component under the first set of process conditions. This allows for a sequential disassemble of the wind turbine blade. For example, the second component may comprise carbon fibres, whereas the first component may comprise glass fibres, so the stepwise swelling of the polymer allows for separation of the glass fibres before full swelling of the component comprising carbon fibres is conducted, whereby two separate fractions of fibres - one solely or primarily containing glass fibres and one solely or primarily containing carbon fibres - may be prepared. Such separated fractions allow for reuse in higher value applications than a fraction containing a mixture with high amounts of both glass and carbon fibres.

Optionally the wind turbine blade further comprises a leading edge protector arranged on at least a part of the leading edge of the blade, wherein at least a part of the leading edge protector and/or a leading edge adhesive adhering the leading edge protector to the blade comprises a acid breakable epoxy polymer.

A second aspect of the present invention provides a method according to claim 11 of disassembling a wind turbine blade or a piece of a wind turbine blade.

The second aspect of the present invention provides a method of disassembling a wind turbine blade or a piece of a wind turbine blade. The method comprises the steps of exposing the wind turbine blade or the piece of the wind turbine blade to an acid to cause the chemically disassemblable polymer to disassemble and recovering fibres from the first fibre reinforced plastic and/or the second fibre reinforced plastics. Preferably, the acid comprises formic acid, as it was found that formic acid provides a relatively fast swelling and/or swelling within a practical timeframe at a lower temperature than most other acids. The method enables recycling of both recovered fibres and of the disassembled polymer for example in the manufacturing of new wind turbine blades or other products. This reduces the amount of virgin resources required for the manufacturing and the carbon footprint of wind turbine blades. Particularly, recovering of monomers from epoxy polymers not available from a renewable source, such as bisphenol A, directly reduces the need for fossil-based monomer.

In an embodiment, the acid causes the acid breakable epoxy polymer to swell into a collection of particles of swelled epoxy polymer and the method further comprises collecting the particles of swelled epoxy polymer and depolymerize the particles of swelled epoxy polymer and recovering monomers and/or oligomer of depolymerized epoxy polymer. The recovered monomers may be reused in new products, such as resin for wind turbine blades. The oligomers may be reused in new resin or further decomposed into monomers before reuse for example in new resin.

In an embodiment, the method comprises recovering non-fibrous material from the wind turbine blade or the piece of the wind turbine blade, wherein optionally the non-fibrous material comprises metal, wood, polymers not being acid breakable epoxy polymer and/or partially swelled acid breakable epoxy polymer. Polymers not being acid breakable epoxy polymer may for example be thermoplastic based core material or components of thermoset resin not being acid breakable epoxy polymer, such as a coating or a thermoset composite material.

In one embodiment, the wind turbine blade is divided into pieces before exposure to the acid. This was found to facilitate handling of the wind turbine blade during disassembly and may involve removing components that are not affected by the swelling process and hence would only increase volume of the treated piece without gaining from the process.

In one embodiment, the method further comprises removing the spar or spar cap before exposure to the acid. It was found that in some cases, even if the spar or spar cap may be susceptible to acid breaking, mechanical separation of these components prior to swelling may allow for better separation of (carbon) fibres of the spar or spar cap from the (glass) fibres of the first fibre reinforced plastic and/or the second fibre reinforced plastic.

In one embodiment, the properties of the acid breakable epoxy polymer of a first component are different from properties of the acid breakable epoxy polymer of a second component, where the first component and the second component are different components selected from the group consisting of the first fibre reinforced plastic, the second fibre reinforced plastic, and the adhesive. If one or more of the spar and/or spar cap, the coating, the core, the third fibre reinforced plastic and the further adhesive comprises a acid breakable epoxy polymer, then it is preferred that the group also contains the acid breakable epoxy polymer containing components of this list. It is preferred that the properties that are different are at least two properties selected from the group of glass transition temperature, tensile strength, compression strength, bending strength, hardness, Young's modulus, transparency and density. The acid breakable epoxy polymer of the first component and the acid breakable epoxy polymer of the second component are swellable under a first set of process conditions, where the acid breakable epoxy polymer of the first component under the first set of process conditions is faster than the swelling of the acid breakable epoxy polymer of the second component under the first set of process conditions. In this embodiment, exposing the wind turbine blade or the piece of a wind turbine blade to the acid to cause the acid breakable epoxy polymer to swell comprises the steps of first at least partially swelling the first component and the second component under the first set of process conditions, and thereafter separating the second component from the first component, and thereafter swelling the second component under a second set of process conditions. This process may be taken into account already during manufacturing of the wind turbine blade and allows for swelling enhanced separation by blade design, yielding simple processing and recycled products of higher value.

In one embodiment, the properties of the acid breakable epoxy polymer of a first component are different from properties of the acid breakable epoxy polymer of a second component, where the first component and the second component are different components selected from the group consisting of the first fibre reinforced plastic, the second fibre reinforced plastic, and the adhesive. If one or more of the spar and/or spar cap, the coating, the core, the third fibre reinforced plastic and the further adhesive comprises an acid breakable epoxy polymer, then it is preferred that the group also contains the acid breakable epoxy polymer containing components of this list. It is preferred that the properties that are different are at least two properties selected from the group of glass transition temperature, tensile strength, compression strength, bending strength, hardness, Young's modulus, transparency and density. The acid breakable epoxy polymer of the first component is swellable under a first set of process conditions, and the acid breakable epoxy polymer of the second component is not chemical disassembly under the first set of process conditions. In this embodiment, exposing the wind turbine blade or the piece of a wind turbine blade to the acid to cause the acid breakable epoxy polymer to swell comprises the steps of first at least partially swelling the first component under the first set of process conditions, thereafter separating the second component from the first component, and thereafter swelling the second component under a second set of process conditions. This process may be taken into account already during manufacturing of the wind turbine blade and allows for swelling enhanced separation by blade design, yielding simple processing and recycled products of higher value.

In another aspect, the present invention provides a wind turbine comprising a plurality of wind turbine blades as described above mounted on a hub, wherein the hub is mounted on a nacelle which is supported by a tower.

In a further aspect, the present invention provides a method of making a wind turbine blade comprising: arranging a core material, first fibres and optionally a spar cap of third fibre reinforced plastic in a blade mould and infusing the first fibres with a resin, preparing a shear web from second fibres and a resin to form second fibre reinforced plastic, optionally preparing a structural spar comprising a third fibre reinforced plastic; assembling blade shells, optional structural spar, and the shear web using an adhesive, wherein the first fibre reinforced plastic, the second fibre reinforced plastic, and the adhesive comprise a acid breakable epoxy polymer.

Optionally the method comprises the step of using fibres recovered from a wind turbine blade in another method of this invention as first fibres and/or second fibres.

Optionally, the method comprises the step of using a core material recovered from a wind turbine blade in another method of this invention as core material.

### Brief Description of the Drawings

So that it may be more fully understood, the invention will now be described, by way of example only, with reference to the following drawings, in which like features are assigned like reference numerals, and in which:
Figure 1 is a schematic perspective view of a wind turbine blade;
Figure 2 is a schematic cross-sectional view of a wind turbine blade;
Figure 3 shows a typical horizontal axis wind turbine; and
Figure 4 shows a method of disassembling a wind turbine blade.

### Detailed Description

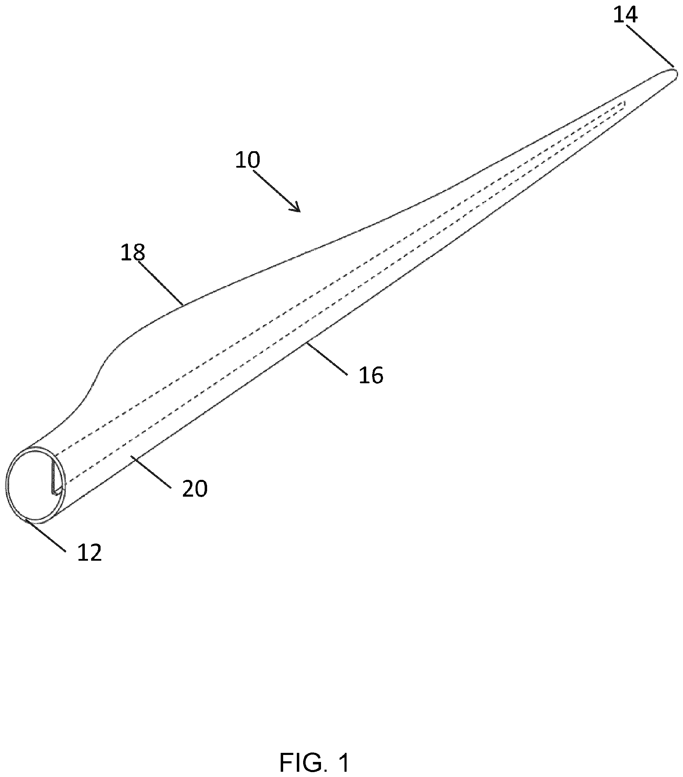

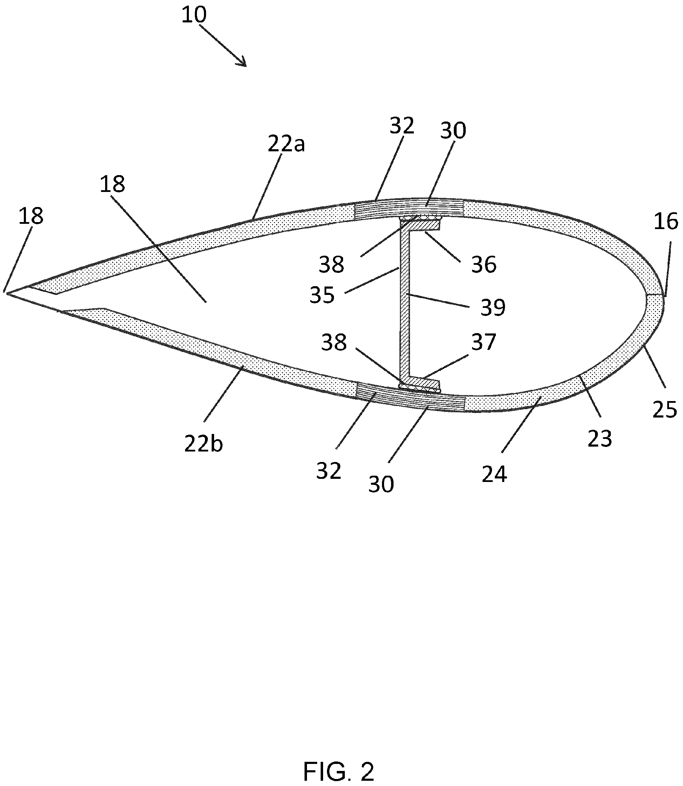

To provide context for the invention, Figures 1 and 2 show the structure of an example wind turbine blade. Figure 1 is a schematic perspective view of a wind turbine blade 10 and Figure 2 is a schematic cross-sectional view of the wind turbine blade 10. As seen in Figure 1, the blade 10 extends in a spanwise direction between a root end 12 and a tip end 14, and in a chordwise direction between a leading edge 16 and a trailing edge 18.

The blade 10 comprises an aerodynamic outer shell 20 defining a substantially hollow interior 21 therewithin. The outer shell 20 may be formed of a first half shell 22a, and a second half shell 22b joined together at or near the leading and trailing edges 16, 18 with a polymer-based adhesive (not shown).

The outer shell 20 is a composite construction comprising a core material, such as a polymer-based foam core material 24 arranged between inner 23 and outer 25 first fibre reinforced plastic (FRP) skins in a sandwich structure. The inner and outer skins 23, 24 comprise layers of fibrous material such as, for example, carbon fibre, glass fibre and aramid fibre provided in non-crimp fabrics, chopped strand mats or woven fabrics. The outer shell 20 further comprises a polymer matrix material which binds the arrangement of core material 24 and fibrous material together to form an integrated structure.

The outer shell 20 may be reinforced to take up loads experienced by the blade 10 in use and to improve the structural rigidity of the blade. In the example shown in Figure 2, the first half shell 22a and the second half shell 22b each comprise longitudinally extending reinforcing structures known as spar caps 30. The spar caps 30 typically comprise third fibre reinforced plastic 32 comprising layers of third fibre reinforcing material held in laminated form by a polymer matrix material. In the example of Figure 2 the spar caps 30 are embedded within the outer shell 20. However, in other examples they may be joined to the inner skins 23 of the shell 20 using a polymer-based adhesive, such as a further adhesive 38.

The outer shell 20 may optionally comprise a leading edge protector (not shown) attached to the leading edge 16 of the blade 10 to protect the leading edge 16 of the blade 10 in use. The leading edge protector may comprise another FRP material comprising layers of fibrous reinforcing material held in laminated form by a polymer matrix material. Alternatively, the leading edge protector may comprise only polymer-based material or a coating. The leading edge protector may be adhered to the blade using a leading edge adhesive.

The outer shell 20 may also comprise a coating applied to its outer skin 24 for the purpose of protecting the shell structure 20 from exposure to environmental conditions when the blade 10 is in use. The coating may be a polymer-based gelcoat or paint.

As seen in Figures 1 and 2, the blade 10 also comprises a shear web 35 that extends longitudinally in the spanwise direction inside the outer shell 20; i.e. inside the hollow interior 21 of the blade 10. In some examples, the wind turbine blade 10 may comprise a plurality of shear webs 35, such as a trailing edge shear web and a main shear web. Each shear web 35 forms part of a spar structure which is configured to absorb bending and torsional loading of the blade 10 in use. As shown in Figure 2, an upper web flange 36 of the shear web 35 is connected to the inner skin 23 of the first half shell 22a, and a lower web flange 37 is connected to the inner skin 23 of the second half shell 22b. The shear web 35 is bonded to the shell 20 by a polymer-based further adhesive 38 located between the upper and lower web flanges 36, 37 and the respective inner skins 23 of the shell 20. The shear web 35 comprises a second fibre reinforced plastic material 39 comprising layers of second fibre reinforcing material held in laminated form by a polymer matrix material.

Several of the components making up the blade 10 comprises one or more polymer-based materials in the form of a matrix material, a coating, an adhesive, or a foam. The polymer-based materials may be thermoset or thermoplastic materials, but for wind turbine blades the polymer-based materials are typically thermosetting materials.

In the example shown here, each of the polymer-based materials used to manufacture the blade 10 are configured to be swellable by exposure to an acid such as acetic acid or formic acid. For example, each polymer-based material may be configured to disassemble into monomers and/or oligomers upon exposure to formic acid at a concentration of between 20% to 50% in water. In this way, the polymer-based material or materials may be disassembled by any combination of softening, swelling, disintegration, and/or acid breaking, thereby allowing the fibrous reinforcing material to be released from the various components making up the blade 10 and recovered for recycling.

The polymeric system(s) which form the various polymer-based materials of the blade 10 are preferably selected to minimise the number different disassembly steps required. This may be achieved by forming the various polymer-based components of the blade 10 from acid breakable epoxy polymers, which are swellable under the same or similar process conditions. However, preferably all of the polymer-based materials forming the blade 10 are based on acid breakable epoxy polymers, which are swellable under the same set of process conditions, so this set of process conditions may be used to disintegrate all the polymer-based materials of the blade 10 to allow recovery and recycling of the fibre reinforcing materials and also the epoxy polymer material itself (for example via depolymerization).

In alternative examples, the various polymer-based components forming the blade 10 may be based on two or more different polymeric systems of which the acid breakable epoxy polymer may be recycled via swelling whereas other polymeric systems may be recycled by other routes after separation from the particles of swelled epoxy polymer. There may also be two different acid breakable epoxy polymers. For example, the acid breakable epoxy polymer of the further adhesive 38, and any other acid breakable epoxy polymer of the adhesive used to form the blade 10 (such as the adhesive joining the first shell half 22a to the second shell half 22b), may be based on a first acid breakable epoxy polymer requiring a first set of swelling process conditions, while some or all of the acid breakable epoxy polymer of other components of the blade 10 are based on a second acid breakable epoxy polymer requiring a second set of disassembly process conditions for fast swelling or at least be much slower at swelling than the first acid breakable epoxy polymers under the first set of swelling process conditions..

In the example above, the bonded components of the blade may first be separated by subjecting the blade to the first set of process conditions, and once separated by the swelling of the first acid breakable epoxy of the adhesive and further adhesive, the remaining blade components may be treated under the second set of process conditions. This approach may also be useful, for example, to allow the fibrous material of the outer shell 20 to be released and recovered separately from the fibrous material of the shear web 35. This is advantageously mitigating the need for a secondary fibre sorting process where the fibre composition of the outer shell 20 is different from that of the shear web 35.

The second acid breakable epoxy polymers may be largely unaffected by the first set of process conditions, or disassembly of the second acid breakable epoxy polymers may begin during exposure to the first set of process conditions. For example, the second acid breakable epoxy polymers may soften during exposure to the first set of process conditions without swelling to a level where the second acid breakable epoxy polymers disintegrate. This may be beneficial, for example, to allow the components which are made from the second acid breakable epoxy polymers to be split up into smaller pieces for faster processing during exposure to the second set of process conditions.

It will be understood that the above discussion provides examples only and that any number of acid breakable epoxy polymers, with any number of sets of swelling process condition requirements, may be used to make the various components of the blade 10.

In all the examples discussed above, the temperature of the acid solution may be elevated to accelerate the rate of chemical disassembly. For example, the acid solution may be at a temperature of between 60°C and 90°C.

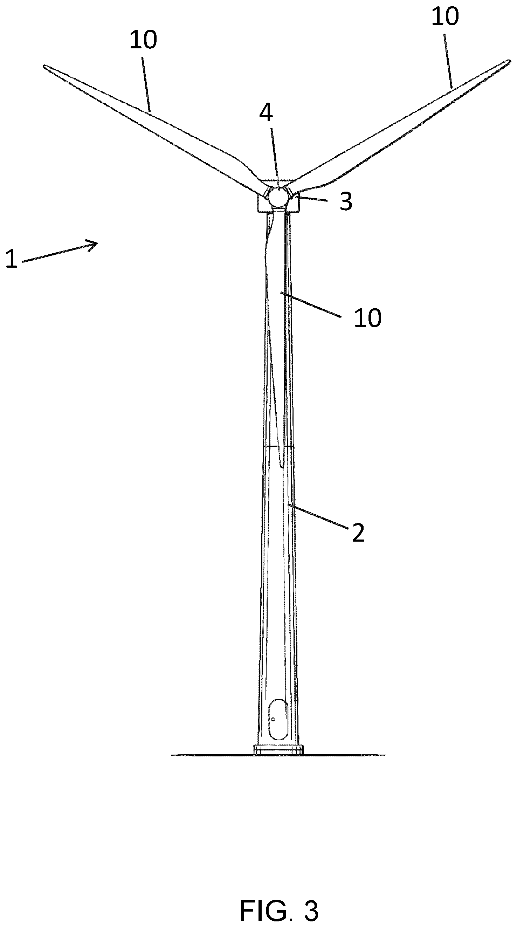

Figure 3 shows a wind turbine 1 comprising a plurality of wind turbine blades 10. The wind turbine 1 shown in Figure 3 is a representation of a typical horizontal axis wind turbine (HAWT) that includes a tower 2, a nacelle 3 mounted at the apex of the tower 2, and a rotor hub 4 supported on the nacelle 3. Three wind turbine blades 10 are supported by the rotor hub 4.

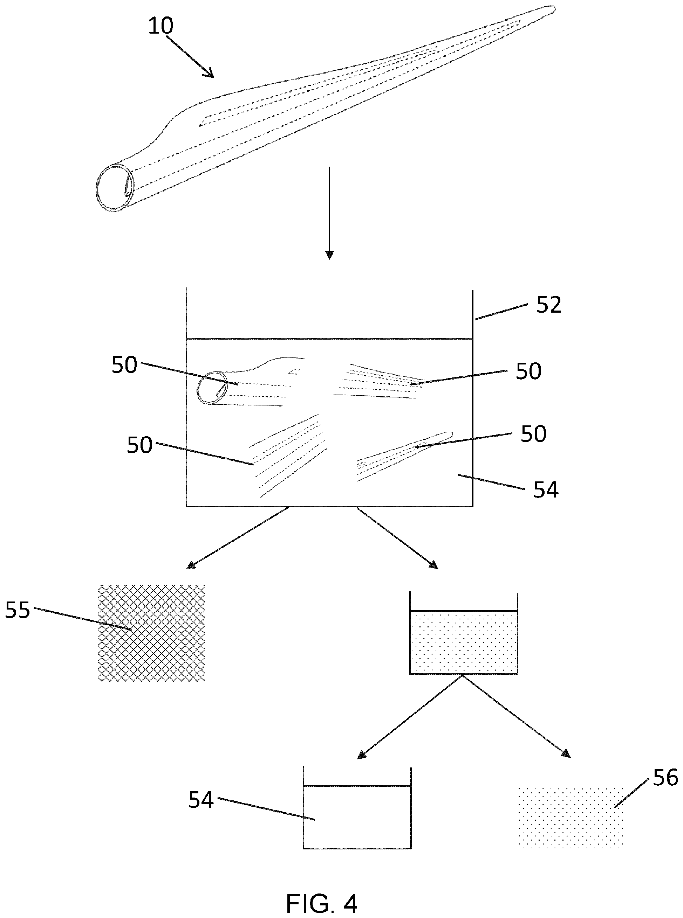

Turning now to Figure 4, a method of disassembling a wind turbine blade 10 which is configured as described above is shown. In this example, all the polymer-based components of the blade 10 are based on acid breakable epoxy.

In a first step, the blade 10 is mechanically divided into smaller blade pieces 50 by sawing, grinding or crushing, for example. The blade pieces 50 are then exposed to acid solution 42 such as submersing or spraying the blade pieces 50 with a water-based solution with a concentration of for example 40% formic acid in water. The acid solution 42 is heated to a temperature of 85°C before the blade pieces 50 are submerged in the solution 42 and the temperature of 85°C is maintained for the duration of the swelling process. Other temperatures are also feasible as well as ambient temperature (corresponding to no heating) and is a compromise between evaporation, heating and process time.

Exposure of the blade pieces 50 to the acid solution 54 causes swelling of the acid breakable epoxy polymers thereby converting the acid breakable epoxy polymers of the blade 10 into particles of swelled epoxy polymers while leaving the fibrous reinforcing materials and components of the outer shell, the spar caps and the shear web not being acid breakable polymers intact. The swelling of the acid breakable epoxy polymer structures causes these materials to soften, swell, and/or disintegrate in the acid, thereby releasing the fibrous reinforcing materials and other non-swellable elements.

A typical process time for the treatment of a blade 10 to allow release of the fibrous reinforcing materials is 10 minutes to several days or even weeks depending on the process conditions and the acid breakable epoxy polymers in question. Once the acid breakable epoxy polymer materials are sufficiently disintegrated, the fibre reinforcement is recovered from the bath 52 by filtering the mixture of formic acid, particles of swelled epoxy polymer and residual parts of the blade, for example. The fibre reinforcement may then be cleaned and reused as a recycled dry fibre material 55. In one example, the dry fibre material 55 may be shredded and used in the production of chopped strand mats of randomly oriented chopped fibres. If the FRP materials comprise a plurality of fibre types, then an additional fibre sorting step may be required if a stepwise disintegration has not been used.

After the fibre reinforcement 55 is removed from the bath 52, the particles of swelled epoxy polymer material 56 may be extracted from the acid solution 54 using an appropriate separation technique, such as for example filtering or spray drying. The recovered particles of swelled epoxy polymer material 57 may be recycled using known techniques for example by depolymerization, and the remaining formic acid 54 may be reused in the disassembly of further wind turbine blades.

Any metallic or other non-polymeric materials (such as wood) may also be recovered from the bath 52. In an alternative example, any mechanically removeable metal (or other material) parts may be removed from the blade 10 before the blade 10 is exposed to the acid solution 54. In a further alternative example, the spar, spar cap 30 and or shear web 35 may be removed from the blade 10 before the blade shell 20 is exposed to the acid solution 54.

The skilled person will appreciate that modifications may be made to the specific embodiments described above without departing from the inventive concept as defined by the claims.

## Claims

1. A wind turbine blade (10) comprising:
a blade shell (20) comprising a core material (24) and a first fibre reinforced plastic (23, 25),
a shear web (35) comprising a second fibre reinforced plastic (39),
and an adhesive,
wherein the shear web is adhered to the blade shell with the adhesive (38), and
wherein the first fibre reinforced plastic (23, 25), the second fibre reinforced plastic (39), and the adhesive (38) each comprise an acid breakable epoxy polymer,
**characterized in that** properties of the acid breakable epoxy polymer of a first component are different from properties of the acid breakable epoxy polymer of a second component, where the first component and the second component are different components selected from the group consisting of the first fibre reinforced plastic (23, 25), the second fibre reinforced plastic (39), and the adhesive (38).

2. The wind turbine blade of claim 1, further comprising a spar and/or a spar cap (30) comprising a third fibre reinforced plastic (32), which third fibre reinforced plastic comprises an acid breakable epoxy polymer.

3. The wind turbine blade of any preceding claim, further comprising at least one wind turbine blade coating arranged on the blade shell (20), wherein the blade coating comprises an acid breakable epoxy polymer.

4. The wind turbine blade of any preceding claim, wherein the core material (24) is a foam core and comprising an acid breakable epoxy polymer.

5. The wind turbine blade of any preceding claim, wherein the acid breakable epoxy polymer of each of the first fibre reinforced plastic (23, 25), the second fibre reinforced plastic (39), and the adhesive (38) are acid breakable under the same process conditions.

6. The wind turbine blade of any preceding claim, wherein the acid breakable epoxy polymer of the first component and the acid breakable epoxy polymer of the second component are swellable under a first set of process conditions, where the swelling of the acid breakable epoxy polymer of the first component under the first set of process conditions is faster than the swelling of the acid breakable epoxy polymer of the second component under the first set of process conditions.

7. A method of disassembling a wind turbine blade (10) or a piece of a wind turbine blade (50) according to any one of the claims 1-6 comprising the steps of:
exposing the wind turbine blade or the piece of the wind turbine blade to an acid (54) to cause the acid breakable epoxy polymer to disintegrate into particles of swelled epoxy polymer (56); and
recovering fibres from the first fibre reinforced plastic and/or the second fibre reinforced plastics.

8. The method of claim 7, further comprising the step of collect the particles of swelled epoxy polymer (56), depolymerize the particles of swelled epoxy polymer and recover monomers and/or oligomers of the depolymerized epoxy polymer.

9. The method of claim 7 or 8, further comprising recovering non-fibrous material from the wind turbine blade (10) or the piece of the wind turbine blade (50), wherein optionally the non-fibrous material comprises at least one of metal, wood, non-swelled polymer and particles of swelled epoxy polymer.

10. The method of any one of claims 7 to 9, further comprising dividing the wind turbine blade (10) into pieces (50) before exposure to the acid.

11. The method of any one of claims 7 to 10, further comprising removing the spar or spar cap (30) before exposure to the acid.

12. The method of any one of the claims 7 to 11, wherein the properties of the acid breakable epoxy polymer of a first component are different from properties of the acid breakable epoxy polymer of a second component, where the first component and the second component are different components selected from the group consisting of the first fibre reinforced plastic (23, 25), the second fibre reinforced plastic (39), and the adhesive (38), and the acid breakable epoxy polymer of the first component and the acid breakable epoxy polymer of the second component are swellable under a first set of process conditions, where the swelling of the acid breakable epoxy polymer of the first component under the first set of process conditions is faster than the swelling of the acid breakable epoxy polymer of the second component under the first set of process conditions, and exposing the wind turbine blade (10) or the piece of the wind turbine blade (50) to the acid (54) to cause the acid breakable epoxy polymer to swell comprises the steps of first at least partially swelling the acid breakable epoxy polymer of the first component and the second component into particles of swelled epoxy polymer under the first set of process conditions, thereafter separating the second component from the first component, and thereafter swelling the acid breakable epoxy polymer of the second component under a second set of process conditions.

## Patentansprüche

1. Windkraftanlagenblatt (10), umfassend:
eine Blattschale (20), umfassend ein Kernmaterial (24) und einen ersten faserverstärkten Kunststoff (23, 25),
einen Schersteg (35), umfassend einen zweiten faserverstärkten Kunststoff (39),
und einen Klebstoff,
wobei der Schersteg mit dem Klebstoff (38) an der Blattschale geklebt ist, und
wobei der erste faserverstärkte Kunststoff (23, 25), der zweite faserverstärkte Kunststoff (39) und der Klebstoff (38) jeweils ein säurespaltbares Epoxidpolymer umfassen,
**dadurch gekennzeichnet, dass** die Eigenschaften des säurespaltbaren Epoxidpolymers einer ersten Komponente sich von den Eigenschaften des säurespaltbaren Epoxidpolymers einer zweiten Komponente unterscheiden, wobei die erste Komponente und die zweite Komponente unterschiedliche Komponenten sind, die aus der Gruppe ausgewählt sind, die aus dem ersten faserverstärkten Kunststoff (23, 25), dem zweiten faserverstärkten Kunststoff (39) und dem Klebstoff (38) besteht.

2. Windkraftanlagenblatt nach Anspruch 1, weiter umfassend einen Holm und/oder einen Gurt (30), der einen dritten faserverstärkten Kunststoff (32) umfasst, wobei der dritte faserverstärkte Kunststoff ein säurespaltbares Epoxidpolymer umfasst.

3. Windkraftanlagenblatt nach einem vorstehenden Anspruch, weiter umfassend mindestens eine Windkraftanlagenblattbeschichtung, die auf der Blattschale (20) angeordnet ist, wobei die Blattbeschichtung ein säurespaltbares Epoxidpolymer umfasst.

4. Windkraftanlagenblatt nach einem vorstehenden Anspruch, wobei das Kernmaterial (24) ein Schaumkern ist und ein säurespaltbares Epoxidpolymer umfasst.

5. Windkraftanlagenblatt nach einem vorstehenden Anspruch, wobei das säurespaltbare Epoxidpolymer des ersten faserverstärkten Kunststoffs (23, 25), des zweiten faserverstärkten Kunststoffs (39) und des Klebstoffs (38) unter den gleichen Prozessbedingungen säurespaltbar ist.

6. Windkraftanlagenblatt nach einem vorstehenden Anspruch, wobei das säurespaltbare Epoxidpolymer der ersten Komponente und das säurespaltbare Epoxidpolymer der zweiten Komponente unter einem ersten Satz von Prozessbedingungen quellbar sind, wobei die Quellung des säurespaltbaren Epoxidpolymers der ersten Komponente unter dem ersten Satz von Prozessbedingungen schneller ist als die Quellung des säurespaltbaren Epoxidpolymers der zweiten Komponente unter dem ersten Satz von Prozessbedingungen.

7. Verfahren zur Demontage eines Windkraftanlagenblattes (10) oder eines Teils eines Windkraftanlagenblattes (50) nach einem der Ansprüche 1-6, umfassend die folgenden Schritte:
Aussetzen des Windkraftanlagenblattes oder des Teils des Windkraftanlagenblattes einer Säure (54), um zu bewirken, dass das säurespaltbare Epoxidpolymer in Partikel aus gequollenem Epoxidpolymer (56) zerfällt; und
Gewinnen von Fasern aus dem ersten faserverstärkten Kunststoff und/oder aus dem zweiten faserverstärkten Kunststoff.

8. Verfahren nach Anspruch 7, weiter umfassend den Schritt des Sammelns der Partikel aus gequollenem Epoxidpolymer (56), des Depolymerisierens der Partikel aus gequollenem Epoxidpolymer und des Gewinnens von Monomeren und/oder Oligomeren aus dem depolymerisierten Epoxidpolymer.

9. Verfahren nach Anspruch 7 oder 8, weiter umfassend das Gewinnen von nichtfaserigem Material aus dem Windkraftanlagenblatt (10) oder dem Teil des Windkraftanlagenblattes (50), wobei optional das nicht-faserige Material mindestens eines von Metall, Holz, nicht-gequollenem Polymer und Partikeln von gequollenem Epoxid-Polymer umfasst.

10. Verfahren nach einem der Ansprüche 7 bis 9, weiter umfassend das Zerteilen des Windkraftanlagenblattes (10) in Stücke (50), bevor es der Säure ausgesetzt wird.

11. Verfahren nach einem der Ansprüche 7 bis 10, weiter umfassend das Entfernen des Holms oder Gurtes (30), bevor er der Säure ausgesetzt wird.

12. Verfahren nach einem der Ansprüche 7 bis 11, wobei sich die Eigenschaften des säurespaltbaren Epoxidpolymers einer ersten Komponente von den Eigenschaften des säurespaltbaren Epoxidpolymers einer zweiten Komponente unterscheiden, wobei die erste Komponente und die zweite Komponente unterschiedliche Komponenten sind, die aus der Gruppe ausgewählt sind, bestehend aus dem ersten faserverstärkten Kunststoff (23, 25), dem zweiten faserverstärkten Kunststoff (39) und dem Klebstoff (38), und das säurespaltbare Epoxidpolymer der ersten Komponente und das säurespaltbare Epoxidpolymer der zweiten Komponente unter einem ersten Satz von Prozessbedingungen quellbar sind, wobei die Quellung des säurespaltbaren Epoxidpolymers der ersten Komponente unter dem ersten Satz von Prozessbedingungen schneller ist als die Quellung des säurespaltbaren Epoxidpolymers der zweiten Komponente unter dem ersten Satz von Prozessbedingungen, und das Aussetzen des Windkraftanlagenblattes (10) oder des Teils des Windkraftanlagenblattes (50) der Säure (54), um das säurespaltbare Epoxidpolymer zum Quellen zu veranlassen, die Schritte des zuerst mindestens teilweisen Quellens des säurespaltbaren Epoxidpolymers der ersten Komponente und der zweiten Komponente zu Partikeln aus gequollenem Epoxidpolymer unter dem ersten Satz von Prozessbedingungen, danach des Trennens der zweiten Komponente von der ersten Komponente, und danach des Quellens des säurespaltbaren Epoxidpolymers der zweiten Komponente unter einem zweiten Satz von Prozessbedingungen umfasst.

## Revendications

1. Pale d'éolienne (10), comprenant :
une paroi de pale (20) comprenant un matériau d'âme (24) et un premier plastique renforcé de fibres (23, 25),
une toile de cisaillement (35) comprenant un deuxième plastique renforcé de fibres (39),
et un adhésif,
dans lequel la toile de cisaillement est collée à la paroi de pale avec l'adhésif (38), et
dans lequel le premier plastique renforcé de fibres (23, 25), le deuxième plastique renforcé de fibres (39) et l'adhésif (38) comprennent chacun un polymère époxy cassable à l'acide,
**caractérisé en ce que** les propriétés du polymère époxy cassable à l'acide d'un premier composant sont différentes des propriétés du polymère époxy cassable à l'acide d'un second composant, où le premier composant et le second composant sont des composants différents sélectionnés dans le groupe consistant en le premier plastique renforcé de fibres (23, 25), le deuxième plastique renforcé de fibres (39) et l'adhésif (38).

2. Pale d'éolienne selon la revendication 1, comprenant en outre une poutre et/ou un raidisseur de longeron (30) comprenant un troisième plastique renforcé de fibres (32), lequel troisième plastique renforcé de fibres comprend un polymère époxy cassable à l'acide.

3. Pale d'éolienne selon une quelconque revendication précédente, comprenant en outre au moins un revêtement de pale d'éolienne agencé sur la paroi de pale (20), dans lequel la pale comprend un polymère époxy cassable à l'acide.

4. Pale d'éolienne selon une quelconque revendication précédente, dans laquelle le matériau d'âme (24) est une âme en mousse et comprend un polymère époxy cassable à l'acide.

5. Pale d'éolienne selon une quelconque revendication précédente, dans laquelle le polymère époxy cassable à l'acide de chacun du premier plastique renforcé de fibres (23, 25), du deuxième plastique renforcé de fibres (39) et de l'adhésif (38) est cassable à l'acide dans les mêmes conditions de traitement.

6. Pale d'éolienne selon une quelconque revendication précédente, dans laquelle le polymère époxy cassable à l'acide du premier composant et le polymère époxy cassable à l'acide du second composant sont gonflables dans un premier ensemble de conditions de traitement, dans lequel le gonflement du polymère époxy cassable à l'acide du premier composant dans le premier ensemble de conditions de traitement est plus rapide que le gonflement du polymère époxy cassable à l'acide du second composant dans le premier ensemble de conditions de traitement.

7. Procédé de démontage d'une pale d'éolienne (10) ou d'un morceau de pale d'éolienne (50) selon l'une quelconque des revendications 1-6, comprenant les étapes de :
exposition de la pale d'éolienne ou du morceau de pale d'éolienne à un acide (54) pour provoquer la désintégration du polymère époxy sensible à l'acide en particules de polymère époxy gonflé (56) ; et
récupération des fibres du premier plastique renforcé de fibres et/ou du deuxième plastique renforcé de fibres.

8. Procédé selon la revendication 7 comprenant en outre l'étape de collecte des particules de polymère époxy gonflé (56), de dépolymérisation des particules de polymère époxy gonflé et de récupération des monomères et/ou oligomères du polymère époxy dépolymérisé.

9. Procédé selon la revendication 7 ou 8, comprenant en outre la récupération de matériaux non fibreux de la pale d'éolienne (10) ou du morceau de pale d'éolienne (50), dans lequel, en option, le matériau non fibreux comprend au moins un des matériaux suivants : métal, bois, polymère non gonflé et particules de polymère époxy gonflé.

10. Procédé selon l'une quelconque des revendications 7 à 9, comprenant en outre la division de la pale d'éolienne (10) en morceaux (50) avant l'exposition à l'acide.

11. Procédé selon l'une quelconque des revendications 7 à 10, comprenant en outre le retrait de la poutre ou du raidisseur de longeron (30) avant l'exposition à l'acide.

12. Procédé selon l'une quelconque des revendications 7 à 11, dans lequel les propriétés du polymère époxy cassable à l'acide d'un premier composant sont différentes des propriétés du polymère époxy cassable à l'acide d'un second composant, où le premier et le second composant sont des composants différents choisis dans le groupe consistant en le premier plastique renforcé de fibres (23, 25), le deuxième plastique renforcé de fibres (39) et l'adhésif (38), et le polymère époxy cassable à l'acide du premier composant et le polymère époxy cassable à l'acide du second composant sont gonflables dans un premier ensemble de conditions de traitement, où le gonflement du polymère époxy cassable à l'acide du premier composant dans les premières conditions de traitement est plus rapide que le gonflement du polymère époxy cassable à l'acide du second composant dans les premières conditions de traitement, et exposer la pale d'éolienne (10) ou la partie de la pale d'éolienne (50) à l'acide (54) pour provoquer le gonflement du polymère époxy cassable à l'acide comprend les étapes de : premièrement, gonflement au moins partiel du polymère époxy cassable à l'acide du premier et du second composant en particules d'époxy gonflé polymère dans les premières conditions de traitement, puis séparation du second composant du premier composant, et enfin gonflement du polymère époxy cassable à l'acide du second composant dans les secondes conditions de traitement.
